(19) **Europäisches Patentamt**

**European Patent Office**

**Office européen des brevets**

(11) **EP 1 168 311 B1**

(12) **EUROPEAN PATENT SPECIFICATION**

(45) Date of publication and mention
of the grant of the patent:
**22.10.2003 Bulletin 2003/43**

(51) Int Cl.⁷: **G11B 7/135**, G11B 7/22,
G02B 13/18

(21) Application number: **01113985.4**

(22) Date of filing: **08.06.2001**

(54) **Objective lens, optical pickup device and optical recording/reproducing apparatus**

Objektivlinse, optische Abtastvorrichtung und optisches Aufnahme/Wiedergabegerät

Lentille d'objectif, tête optique et appareil d'enregistrement et/ou lecture optique

(84) Designated Contracting States:
**DE FR GB**

(30) Priority: **12.06.2000 JP 2000175229**

(43) Date of publication of application:
**02.01.2002 Bulletin 2002/01**

(73) Proprietor: **Pioneer Corporation**
**Meguro-ku, Tokyo (JP)**

(72) Inventors:
  • **Kikuchi, Ikuya**
  **Tsurugashima-shi, Saitama 350-2288 (JP)**
  • **Sato, Makoto**
  **Tsurugashima-shi, Saitama 350-2288 (JP)**
  • **Koike, Katsuhiro**
  **Tsurugashima-shi, Saitama 350-2288 (JP)**
  • **Maeda, Takanori**
  **Tsurugashima-shi, Saitama 350-2288 (JP)**

(74) Representative: **Betten & Resch**
**Patentanwälte,**
**Theatinerstrasse 8**
**80333 München (DE)**

(56) References cited:
**EP-A- 0 840 156        US-A- 5 805 355**

**Description**

## BACKGROUND OF THE INVENTION

1. Field of the invention

The present invention relates to an optical system of an optical pickup of an optical recording/reproducing apparatus for recording/reproducing information to/from an optical information recording medium such as an optical disc and an optical card and, particularly relates to an objective lens of the optical system used therein.

2. Description of the related art

Optical discs such as a DVD (Digital Versatile Disc) are known as an optical information recording medium. A study of a high density DVD (HD-DVD) system is also in progress in order to increase the capacity of an optical disc. For the purpose of increasing density and capacity of information signals in such optical disc for writing and reading data, research and development is in progress for an optical pickup device and an information recording/reproducing apparatus with high performance.

An optical beam with a short wavelength is under consideration for use for an optical pickup so as to correspond to a high density of the optical information recording medium, and the numerical aperture (NA) of an objective lens is increased so that a diameter of the illumination spot will be decreased. In a recording system using the HD-DVD, condensing power is dispersed by using a so-called two-group-set lens, that is, at least two condenser lenses, whose optical axes correspond to each other, for an objective lens, which would have a large numerical aperture such as 0.85, for example, so that a good characteristic of image height can be obtained (Japanese Laid-Open Patent No. Hei 10-255303).

For example, a conventional objective lens according to JP-A-10-255303 consisting of the two-group-set lens comprises a first lens into which parallel light enters from a side of a light source, and a second lens through which a luminous flux from the first lens transmits and exits for focusing on a recording surface of an optical disc. In the case of arranging an objective lens so that it would be divided into two lenses, the first and second lenses on the incident and exiting sides, it is necessary to provide precise alignment of the two condenser lenses. The alignment precision is required to be a micrometer or less, for example, at an axis of lens meridian or center axis in rotation. For achieving such precision, adjustment for alignment is necessary individually in assembling the two lenses. Thus, the objective lens comprising two lenses would cost more, because a process for adjusting the lenses is complicated in that assembly of the lenses is performed while the adjustment is performed by observing the condition of the lens stop on light passing therethrough.

In manufacturing an objective lens of an optical system for an optical pickup, a glass molding method, in which a glass ball is spherically preformed by a precision glass press, that is, a preformed glass ball is formed into an aspherical shape, is adopted instead of a polishing method in which a block made of a glass material is polished until it becomes a spherical surface, and then, formed into an aspherical shape. In molding a glass into an aspherical lens, a first process of an optical glass, which is a so-called preforming process, is carried out in advance so that a preformed ball would be obtained, and then, the preformed ball undergoes precision press molding. It is required that the spherical shape have excellent stability and easiness of reproduction in molding and that particularly a glass lens with a small diameter is made from the preformed ball.

Allotting much more light condensing power to the second lens on the exiting side in a two-group-set lens allows a tolerance of center axis of the objective lens, comprising two lenses, to be large, so that the alignment precision can be relaxed. Especially when the two-group-set lens, in which the second lens on the exiting side is thick, is used for an optical disc having a thin light transmission layer illuminated by light, it can provide a good characteristic. A thick lens should be used for the second lens in order to allot much more light condensing power to the second lens.

However, it is difficult to produce the thick second lens by glass press molding. That is, a preformed ball made of glass is put in a metal mold to be pressed to produce a thick lens by the glass press, so that a gap would appear between the ball and the metal mold. This means that a lens having a small center radius of curvature cannot be made very thick.

A first condition of a preformed ball enabling molding of a pressed lens is that the preformed ball is so large that it has much more material volume than the volume of a molded press lens. A size and shape of a light incident side surface of the second lens, that is, the first surface is determined in accordance with a lens specification in optical design. The size and shape of a light exiting side surface of the second lens, that is, the second surface is also determined in accordance with its lens specification. The radius r of the preformed ball having such lens volume is required to satisfy the following condition in respect of a cylindrical surface having an outer diameter of the lens and the volume $V2$ surrounded by the first and second surfaces:

$$r \geq \sqrt[3]{\frac{3}{4\pi}V2}$$ (1)

Furthermore, in the case that a flange is formed at the circumference of the lens body for a reference surface, the necessary radius r should be substantially larger. That is, it is impossible for both of the first and second surfaces to have a paraxial curvature radius smaller than r.

Actual alignment precision of the second lens is determined in accordance with a mechanical absolute dimension, while an allowable amount of precision in alignment of a lens increases almost proportional to an effective diameter thereof. Thus, an effective diameter of the second lens can be made large so that the alignment precision can be allowable. In such structure of a lens, however, the optical pickup would be large, which causes difficulty for an optical spot to follow a track of a recording medium such as an optical disc moving at a high speed.

According to the reasons mentioned above, in obtaining an objective lens comprising two lenses having a high numerical aperture, it is difficult to produce a stable glass pressed lens, which does not require adjustment of alignment of the two lenses and which has a small diameter and shape. In order to assemble the foregoing objective lens, it is necessary to perform location adjustment of one lens in two axes or to perform alignment adjustment by rotating an eccentric lens. Otherwise, the image height would be insufficient when the alignment precision is relaxed, so that practical performance cannot be obtained.

The objective lens comprising two lenses having a high numerical aperture has little tolerance for lens thickness. Especially, the amount of tolerance of the second lens thickness is required to be severe, on the order of a micrometer. This creates a difficult condition for performing a glass pressing step. In addition, there is a problem that the maximum number of lenses formed by one metal mold is small since a metal mold is apt to be worn away over the tolerance range. Thus, there is a problem in using the foregoing objective lens for an optical disc device to be mass-produced.

Accordingly, the volume of the second lens is limited due to the limitation that the diameter of the preformed ball should not be larger than the center curvature radius of the first surface, so that a thick lens with light condensing power cannot be provided. As a result, the lens set is arranged so that the light condensing power is allotted to the first lens, and the objective lens is designed such that the allowable amount of tolerance in a lens space cannot be large and assembly of the objective lens cannot be performed without adjustment.

OBJECT AND SUMMARY OF THE INVENTION

An object of the present invention is, in view of the foregoing problems, to provide an aspherical lens in a shape that can obtain an objective lens having a high numerical aperture, the objective lens being in a shape capable of substantial non-adjustment assembly.

An objective lens according to the invention is a molded glass objective lens comprising: a first surface having a center symmetric convex surface shape at least in a range of an optical beam passing therethrough; a second surface having a center symmetric effective surface shape at least in a range of an optical beam passing therethrough on a side opposite to said first surface; and a center symmetric cylindrical side surface crossing with the first surface, characterized in that a center curvature radius rA of the first surface satisfies the following formula:

$$\sqrt[3]{\frac{3}{4\pi}V1} \leq rA < \sqrt[3]{\frac{3}{4\pi}V2}$$

(wherein V1 denotes the volume of the molded glass objective lens, and V2 denotes the volume of a virtual lens portion surrounded by a cylindrical surface including the first and second surfaces and the cylindrical side surface).

In one aspect of the objective lens according to the invention, the objective lens further comprises a circular reference plane surface which does not shield a transmitting luminous flux refracted at said first surface and is perpendicular to an optical axis within a border surface which would exist assuming that *said* virtual lens portion is overlapped with said molded glass objective lens so as to correspond to said first and second surfaces and said cylindrical side surface.

In another aspect of the objective lens according to the invention, the objective lens further comprises such a shape that the curvature radius is minimum outside an effective diameter of said second surface.

In a further aspect of the objective lens according to the invention, the objective lens further comprises a circular reference cone surface centering an optical axis which does not shield a transmitting luminous flux refracted at said first surface within a border surface which would exist assuming that said virtual lens portion is overlapped with said molded glass objective lens so as to correspond to said first and second surfaces and said cylindrical side surface.

BRIEF DESCRIPTION OF THE DRAWINGS

Fig. 1 is a schematic structural view showing the inside of an optical pickup according to the invention;

Fig. 2 is a partially sectional view showing an integral part of an objective lens unit of an optical pickup in an embodiment of the invention;

Figs. 3 to 6 are partially sectional views each showing an integral part of an objective lens unit of an optical pickup in another embodiment of the invention; and

Fig. 7 is a partially sectional view showing an integral part of an objective lens unit of an optical pickup as a comparison example.

DETAILED DESCRIPTION OF THE PREFERRED EMBODIMENTS

Embodiments of the invention will be described hereinafter on the basis of the attached drawings.

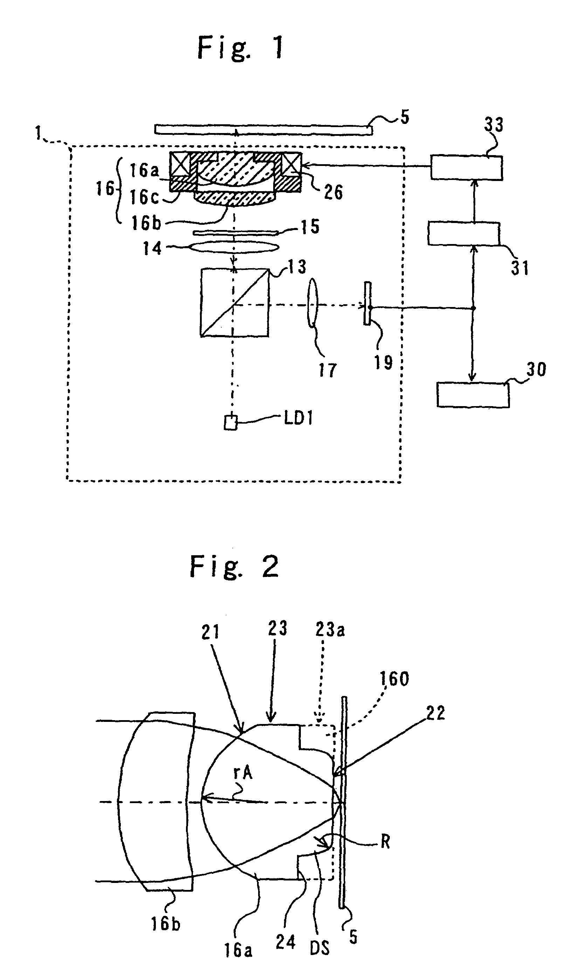

Fig. 1 shows a summary of an optical recording/reproducing apparatus provided with an optical pickup device in a first embodiment. The optical pickup is provided with a semiconductor laser LD1 for emitting blue light having a short wavelength in a range of 400 nm to 410 nm, preferably around 405 nm.

The optical pickup comprises a polarizing beam splitter 13, a collimator lens 14, a quarter wavelength plate 15 and a unit 16 of the two-group-set objective lens consisting of two lenses. In the foregoing light illuminating optical system, a laser beam from the semiconductor laser LD1 passes through the polarizing beam splitter 13 to be formed into a parallel light beam by the collimator lens 14, is transmitted through the quarter wavelength plate 15 to be condensed by the objective lens unit 16 toward an optical disc 5 disposed near a focal point of the objective lens unit 16, and forms an optical spot in a pit line on an information recording surface of the optical disc 5.

In addition to the foregoing light illuminating optical system, the optical pickup further includes a light detecting optical system such as a detecting lens 17. The objective lens unit 16, the quarter wavelength plate 15 and the polarizing beam splitter 13 are also used in the light detecting optical system. The objective lens unit 16 condenses light reflected at the optical disc 5 so that the polarizing beam splitter 13 would direct the reflected light having passed through the quarter wavelength plate 15 toward a condenser lens 17 for detection. The luminous flux condensed by the detecting lens 17 passes through an astigmatism generating element (not shown) such as a cylindrical lens or multiple lens, for example, to form an optical spot near the center of a light receiving surface 19 of an optical detector.

The light receiving surface 19 of an optical detector is connected to a demodulating circuit 30 and an error detecting circuit 31. The error detecting circuit 31 is connected to a driving circuit 33, which drives a mechanism including an actuator 26 for controlling tracking and focusing of the objective lens unit.

The optical detector supplies the demodulating circuit 30 and the error detecting circuit 31 with an electric signal in accordance with an optical spot image formed near the center of the light receiving surface 19 thereof. The demodulating circuit 30 generates a recording signal on the basis of the electric signal. The error detecting circuit 31 generates a focusing error signal, a tracking error signal, and other servo signals on the basis of the electric signal to supply each actuator with each driving signal through the driving circuit 33 of the actuator, so that the actuator can servo control and drive the objective lens unit 16 in accordance with each driving signal.

As shown in Fig. 1, the two-group-set objective lens unit 16 of an optical pickup according to the invention is an assembled body of a combination objective lens formed by combining a condenser lens 16a with a first lens 16b. The first lens 16b is a condenser lens disposed at a light source side. The condenser lens 16a for condensing a light beam onto a recording surface is a molded glass lens formed of glass. The condenser lens 16a and the first lens 16b are coaxially disposed in an optical axis by a holder 16c.

A structure of the second lens of an objective lens for the optical pickup in the present embodiment is shown in Fig. 2. In Fig. 2, the second lens 16a is defined by a first surface, which has a shape of a center symmetric convex surface and which is an aspherical surface 21 on the light source side, a second surface 22, which has a shape of a center symmetric effective surface disposed on the opposite side of the first surface so as to be opposed thereto and which is disposed on a side of an optical disc, that is, on an exiting side, and a center symmetric cylindrical side surface 23, which crosses with the first surface (the first surface and the second surface exsist in order from the incident side of the light). As shown in Fig. 2, when it is assumed that there would be a virtual lens portion 160 surrounded by a cylindrical surface 23a, which includes the first and second surfaces 21 and 22 and the cylindrical side surface 23, the second lens 16a is greatly decreased in volume in comparison with the virtual lens portion 160, because the second surface 22 with an effective diameter of the second lens 16a is reduced by an aspherical shape in step-wise of stairs at the outer circumference portion thereof. Here, the volume of the second lens 16a is determined so as to be less than that of a preformed glass ball having a center curvature radius of the first surface 21. Thus, press molding of the second lens 16a is possible by using a preformed ball having such radius. That is, in respect of a small paraxial curvature radius rA expressed by the following formula (2):

$$rA < \sqrt[3]{\frac{3}{4\pi}V2} \tag{2}$$

(wherein, V2 denotes the volume of the virtual lens portion 160 surrounded by the cylindrical surface including the first and second surfaces and the cylindrical side surface), which does not satisfy the foregoing formula (1), the reduced volume V1 for a molded glass objective lens is also set as expressed in the following formula (3):

$$\sqrt[3]{\frac{3}{4\pi}V1} \le rA \tag{3},$$

so that molding of a glass objective lens by glass pressing would be possible.

That is, as shown in Fig. 2, the second lens 16a of the objective lens is arranged so that the center curvature radius rA of the first surface 21 would satisfy the following formula:

$$\sqrt[3]{\frac{3}{4\pi}V1} \le rA < \sqrt[3]{\frac{3}{4\pi}V2}$$

(wherein, V1 denotes the volume of a molded glass objective lens and V2 denotes the volume of the virtual lens portion surrounded by the cylindrical surface including the first and second surfaces and the cylindrical side surface).

As shown in Fig. 2, according to the invention, a part of a depressed surface DS newly created by reducing the volume of a lens includes a plane circular reference surface 24 perpendicular to an optical axis. That is, assuming that the virtual lens portion 160 is overlapped with the molded glass objective lens 16a so as to correspond to the first and second surfaces 21 and 22 and the cylindrical side surface 23 in an imaginary space, the depressed surface DS i.e., border surface distinct between the virtual lens portion 160 and the molded glass objective lens 16a can include the circular reference plane surface 24 which is perpendicular to the optical axis and arranged not to shield a transmitting luminous flux refracted at the first surface 21.

In the embodiment, the plane reference surface 24 perpendicular to the optical axis is formed on the border surface of the part reduced in volume from the virtual lens portion 160 having an outer diameter cylinder 23a. Thus, the reference plane 24 can be used as a reference of an angle or location in mounting a lens in a barrel or an actuator. Since a flange can be disposed inside the effective diameter of the first surface 21 on the incident side rather than being disposed projectingly outside the cylindrical side surface of a lens as conventional, it would be possible to make the lens volume small and arranged so that the second surface 22 would be provided with the reference surface 24. In the invention, there is provided a range that the surface of the foregoing part reducing the volume has a minimum curvature radius R outside the effective diameter of the second surface. Providing such a range on the second surface can reduce the lens volume effectively and secure the large area of the reference surface 24 functioning as a flange.

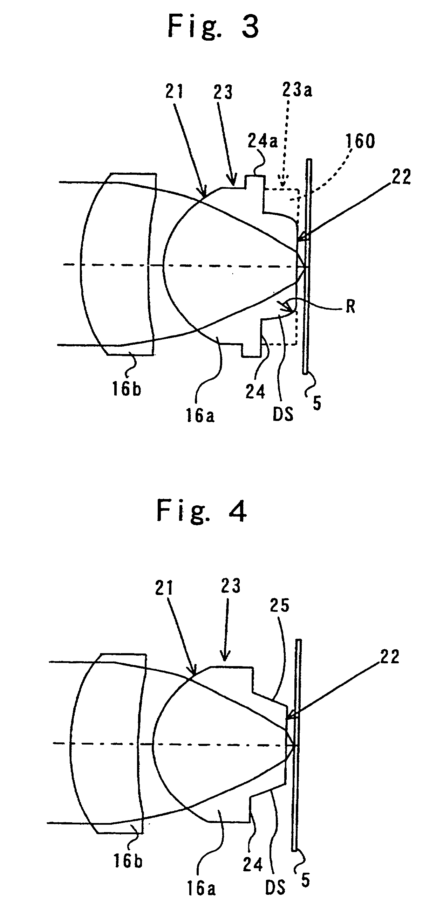

It is also possible to prevent the possible increase of the lens volume by providing the circular reference plane 24 and enlarging the diameter of the foregoing circle so that the reference flange surface 24a would be arranged outside the cylindrical side surface 23 of the objective lens, as shown in Fig. 3.

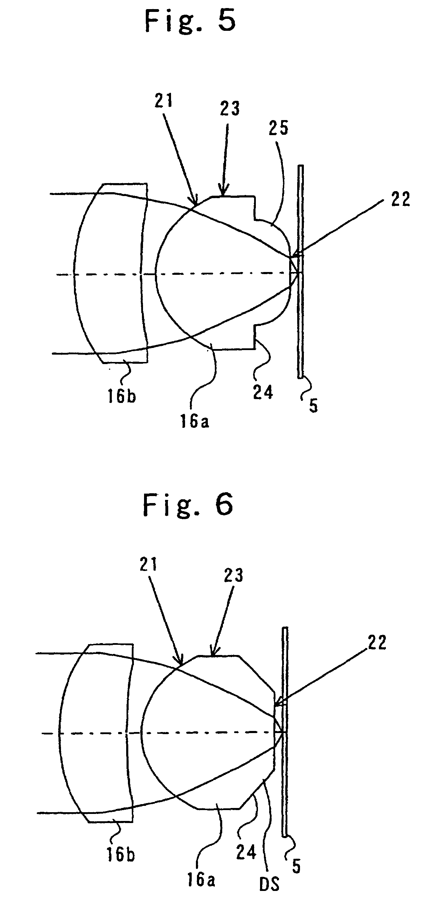

In the foregoing embodiment, the aspherical surface is used outside the effective diameter of the second surface 22 to reduce the volume, but a circular surface 25 on a cone surface, which is straight in section, may be used as shown in Fig. 4. Moreover, it is also possible to use the circular surface 25 on a circularity surface, which is an arc in section, as shown in Fig. 5.

When the cone surface is used in the foregoing objective lens, it is also possible to use the cone surface 24 as a reference surface as shown in Fig. 6 without providing the circular reference plane perpendicular to the optical axis. That is, this objective lens is arranged such that, when the virtual lens portion is overlapped with the molded glass objective lens so as to correspond to the first and second surfaces and the cylindrical side surface, the depressed surface would not shield the transmitting luminous flux refracted at the first surface and would include a circular reference cone surface 24 centering the optical axis.

An objective lens in the embodiment of the invention shown in Fig. 2 will be described concretely. In this objective lens, the center curvature radius (paraxial curvature radius) of the first surface outside the effective diameter is 1.443 mm and the diameter of the preformed ball is 1.332 mm, which means the volume of the preformed ball is 9.905322 mm$^3$. Thus, a condition that the center curvature radius should be larger than the diameter of the preformed ball is satisfied, so that a lens having this optical design function can be produced by glass pressing in practice. The wavelength of the light source herein used is 430 nm.

Here, a shape of the aspherical surface Z of the objective lens is determined by the following formula:

$$Z = \frac{\left(\dfrac{r^2}{R}\right)}{1 + \sqrt{1 - (cc + 1)\left(\dfrac{r}{R}\right)^2}} + A4r^4 + A6r^6 + A8r^8 + A10r^{10} + A12r^{12}$$

wherein, r denotes a distance from the optical axis, Z denotes a distance between a point on an aspherical surface away from the distance r from the optical axis and a contact plane which is perpendicular to the optical axis and passes through an top point of the aspherical surface, R denotes a paraxial curvature radius of the aspherical surface, CC denotes a cone coefficient, and A4, A6, A8, A10 and A12 denote respective aspherical coefficients of the fourth, sixth, eighth, tenth and twelfth degrees.

The following Tables 1 and 2 show data of respective aspherical lenses of the forgoing objective lens which are automatically designed with a computer.

Table 1

| Surface Number | Curvature Radius | Surface Interval | Refractive Index | Medium |
|---|---|---|---|---|
| 1 | 3.367 | 1.200 | 1.505 | FCD1 |
| 2 | 11.897 | 0.200 | 1.000 | |
| 3 | 1.443 | 2.300 | 1.763 | M-NBF1 |
| 4 | 0.000 | 0.148 | 1.000 | |
| 5 | 0.000 | 0.100 | 1.612 | carbo |

Table 2

| | | First Surface | Second Surface | Third Surface | Fourth Surface |
|---|---|---|---|---|---|
| Cone Coefficient | CC | -4.01806E-01 | -1.20441E+01 | -7.47256E-01 | 0.00000E+00 |
| Aspherical Coefficient | A4 | 1.14009E-03 | 9.98225E-04 | 2.15649-02 | 0.00000E+00 |
| | A6 | -1.16805E-03 | 2.26861E-04 | 9.90298E-03 | 0.00000E+00 |
| | A8 | 5.38134E-04 | -5.58739E-04 | -5.70829E-03 | 0.00000E+00 |
| | A10 | -1.26049E-04 | 3.28266E-04 | 4.99603E-03 | 0.00000E+00 |
| | A12 | 1.48052E-06 | -7.12834E-05 | -1.48783E-03 | -7.00000E-01 |

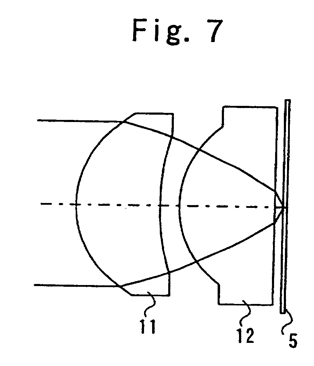

Further, an example of a conventional two-group-set objective lens having a high numerical aperture shown in Fig. 7 will be described below for comparison. A shape of the surface in the effective diameter of the conventional is same as that of the foregoing embodiment.

In Fig. 7, numeral 11 denotes a first lens into which parallel light, for example, enters from a light source side, and numeral 12 denotes a second lens from which the luminous flux having passed through the first lens exits to pass through a predetermined thickness of a transmission layer of an optical disc 5 so as to focus on a recording surface. The volume of a preformed glass ball to be used is 13.0 mm$^3$, the diameter of the preformed ball is 1.46 mm, and the paraxial curvature radius is 1.50 mm. The wavelength of a light source used here is same as that of the foregoing embodiment.

In this comparison example, the center curvature radius of the third surface is 1.443 mm and the diameter of the preformed ball is 1.458 mm. This does not satisfy a limitation that the center curvature radius should be larger than the diameter of the preformed ball . Thus, it is theoretically possible to optically design a lens so as to have a good performance, but it is practically impossible to produce it by a grass press. According to the invention, however, it is possible to use a preformed glass ball having a smaller diameter, so that freedom in optical design and production would be enhanced.

As described above, according to the invention, the volume of a lens can be effectively reduced in a glass press lens, so that it would be possible to produce a thick lens having a small center curvature radius. In addition, it is possible to arrange a reference surface, which can keep down an axis in mounting a lens, so that a two-group-set lens having a good performance can be provided.

**Claims**

1. A molded glass objective lens (16a) comprising: a first surface (21) having a center symmetric convex surface shape at least in a range of an optical beam passing therethrough; a second surface (22) having a center symmetric effective surface shape at least in a range of an optical beam passing therethrough on a side opposite to said first surface; and a center symmetric cylindrical side surface (23) crossing with said first surface, **characterized in that** a center curvature radius rA of said first surface satisfies the following formula:

$$\sqrt[3]{\frac{3}{4\pi}V1} \leq rA < \sqrt[3]{\frac{3}{4\pi}V2}$$

   wherein V1 denotes the volume of said molded glass objective lens. and V2 denotes the volume of a virtual lens portion (160) surrounded by a cylindrical surface including said first and second surfaces and said cylindrical side surface.

2. An objective lens according to claim 1. further comprising a circular reference plane surface (24) which does not shield a transmitting luminous flux refracted at said first surface and is perpendicular to an optical axis, within a border surface which would exist assuming that said virtual lens portion is overlapped with said molded glass objective lens so as to correspond to said first and second surfaces and said cylindrical side surface.

3. An objective lens according to claim 2, further comprising such a shape that the curvature radius is minimum outside an effective diameter of said second surface.

4. An objective lens according to claim 1, furthe comprising a circular reference cone surface (25) centering an optical axis which does not shield a transmitting luminous flux refracted at said first surface, within a border surface which would exist assuming that said virtual lens portion is overlapped with said molded glass objective lens so as to correspond to said first and second surfaces and said cylindrical side surface.

5. An optical pickup device **characterized by comprising** a molded glass objective lens including: a first surface having a center symmetric convex surface shape at least in a range of an optical beam passing therethrough; a second surface having a center symmetric effective surface shape at least in a range of an optical beam passing therethrough on a side opposite to said first surface; and a center symmetric cylindrical side surface crossing with said first surface, **characterized in that** a center curvature radius rA of said first surface satisfies the following formula:

$$\sqrt[3]{\frac{3}{4\pi}V1} \leq rA < \sqrt[3]{\frac{3}{4\pi}V2}$$

   wherein V1 denotes the volume of said molded glass objective lens and V2 denotes the volume of a virtual lens portion (160) surrounded by a cylindrical surface including said first and second surfaces and said cylindrical side surface,

6. An optical recording/reproducing apparatus **characterized by** comprising an optical pickup device having a molded glass objective lens including: a first surface having a center symmetric convex surface shape at least in a range of an optical beam passing therethrough; a second surface having a center symmetric effective surface shape at least in a range of an optical beam passing therethrough on a side opposite to said first surface; and a center symmetric cylindrical side surface crossing with said first surface, **characterized in that** a center curvature radius rA of said first surface satisfies the following formula:

$$\sqrt[3]{\frac{3}{4\pi}V1} \le rA < \sqrt[3]{\frac{3}{4\pi}V2}$$

wherein V1 denotes the volume of said molded glass objective lens. and V2 denotes the volume of a virtual lens portion (160) surrounded by a cylindrical surface including said first and second surfaces and said cylindrical side surface.

**Patentansprüche**

1. Pressglas-Objektivlinse (16a), die Folgendes aufweist: eine erste Oberfläche (21) mit einer zentralsymmetrischen konvexen Oberflächenform mindestens in einem Bereich eines dadurch hindurchgehenden Lichtstrahls, eine zweite Oberfläche (22) mit einer zentralsymmetrischen wirksamen Oberflächenfonn mindestens in einem Bereich eines dadurch hindurchgehenden Lichtstrahls auf einer der ersten Oberfläche entgegengesetzten Seite, und eine zentralsymmetrische zylindrische Seitenfläche (23), die die erste Oberfläche kreuzt, **dadurch gekennzeichnet, dass** ein zentraler Krümmungsradius rA der ersten Oberfläche der folgenden Formel genügt:

$$\sqrt[3]{\frac{3}{4\Pi}V1} \le rA < \sqrt[3]{\frac{3}{4\Pi}V2}$$

worin V1 das Volumen der Pressglas-Objektivlinse bezeichnet und V2 das Volumen eines virtuellen Linsenabschnitts (160) bezeichnet, der von einer Zylinderfläche umgeben ist, die die erste und die zweite Oberfläche und die zylindrische Seitenfläche umfasst.

2. Objektivlinse nach Anspruch 1, die weiterhin eine kreisförmige Referenzebene-Oberfläche (24) aufweist, die innerhalb einer Randfläche, die unter der Voraussetzung existieren würde, dass sich der virtuelle Linsenabschnitt mit der Pressglas-Objektivlinse überschneidet, um der ersten und der zweiten Oberfläche und der zylindrischen Seitenfläche zu entsprechen, einen an der ersten Oberfläche gebrochenen sich fortpflanzendien Lichtstrom nicht abschirmt und senkrecht zu einer optischen Achse ist.

3. Objektivlinse nach Anspruch 2, die weiterhin eine solche Form hat, dass der Krümmungsradius außerhalb eines wirksamen Durchmessers der zweiten Oberfläche minimal ist.

4. Objektivlinse nach Anspruch 1, die weiterhin eine kreisförmige Referenzkegel-Oberfläche (25) aufweist, die eine zentrale optische Achse umgibt, die innerhalb einer Randfläche, die unter der Voraussetzung existieren würde, dass sich der virtuelle Linsenabschnitt mit der Pressglas-Objektivlinse überschneidet, um der ersten und der zweiten Oberfläche und der zylindrischen Seitenfläche zu entsprechen, einen an der ersten Oberfläche gebrochenen sich fortpflanzenden Lichtstrom nicht abschirmt.

5. Optische Abtastvorrichtung, **dadurch gekennzeichnet, dass** sie eine Pressglas-Objektivlinse aufweist, die Folgendes enthält: eine erste Oberfläche mit einer zentralsymmetrischen konvexen Oberflächenform mindestens in einem Bereich eines dadurch hindurchgehenden Lichtstrahls, eine zweite Oberfläche mit einer zentralsymmetrischen wirksamen Oberflächenform mindestens in einem Bereich eines dadurch hindurchgehenden Lichtstrahls auf einer der ersten Oberfläche entgegengesetzten Seite, und eine zentralsymmetrische zylindrische Seitenfläche, die die erste Oberfläche kreuzt, **dadurch gekennzeichnet, dass** ein zentraler Krümmungsradius rA der ersten Oberfläche der folgenden Formel genügt:

$$\sqrt[3]{\frac{3}{4\Pi}V1} \le rA < \sqrt[3]{\frac{3}{4\Pi}V2}$$

worin V1 das Volumen der Pressglas-Objektivlinse bezeichnet und V2 das Volumen eines virtuellen Linsenabschnitts (160) bezeichnet, der von einer Zylinderfläche umgeben ist, die die erste und die zweite Oberfläche und die zylindrische Seitenfläche umfasst.

6. Optisches Aufnahme-/Wiedergabegerät, **dadurch gekennzeichnet, dass** es eine optische Abtastvorrichtung mit einer Pressglas-Objektivlinse aufweist, die Folgendes enthält: eine erste Oberfläche mit einer zentralsymmetrischen konvexen Oberflächenform mindestens in einem Bereich eines dadurch hindurchgehenden Lichtstrahls, eine zweite Oberfläche mit einer zentralsymmetrischen wirksamen Oberflächenform mindestens in einem Bereich eines dadurch hindurchgehenden Lichtstrahls auf einer der ersten Oberfläche entgegengesetzten Seite, und eine zentralsymmetrische zylindrische Seitenfläche, die die erste Oberfläche kreuzt, **dadurch gekennzeichnet, dass** ein zentraler Krümmungsradius rA der ersten Oberfläche der folgenden Formel genügt:

$$\sqrt[3]{\frac{3}{4\Pi}V1} \leq rA < \sqrt[3]{\frac{3}{4\Pi}V2}$$

worin V1 das Volumen der Pressglas-Objektivlinse bezeichnet und V2 das Volumen eines virtuellen Linsenabschnitts (160) bezeichnet, der von einer Zylinderfläche umgeben ist, die die erste und die zweite Oberfläche und die zylindrische Seitenfläche umfasst.

## Revendications

**1.** Lentille de focalisation en verre moulé (16a) comprenant : une première surface (21) ayant une forme de surface convexe à symétrie centrale au moins dans la portée d'un faisceau optique traversant celle-ci ; une seconde surface (22) ayant une forme de surface effective à symétrie centrale au moins dans la portée d'un faisceau optique traversant celle-ci sur le côté opposé à ladite première surface ; et une surface latérale cylindrique à symétrie centrale (23) croisant ladite première surface, **caractérisée en ce qu'**un rayon de courbure central rA de ladite première surface satisfait à la formule suivante :

$$\sqrt[3]{\frac{3}{4\pi}V1} \leq rA < \sqrt[3]{\frac{3}{4\pi}V2}$$

dans laquelle V1 désigne le volume de ladite lentille de focalisation en verre moulé et V2 désigne le volume d'une partie de lentille virtuelle (160) entourée par une surface cylindrique comprenant lesdites première et seconde surfaces et ladite surface latérale cylindrique.

**2.** Lentille de focalisation selon la revendication 1, comprenant, de plus, une surface plane de référence circulaire (24) qui ne bloque pas la transmission d'un flux lumineux réfracté à ladite première surface et est perpendiculaire à un axe optique, dans une surface de séparation qui existerait en supposant que ladite partie de lentille virtuelle se chevauche avec ladite lentille de focalisation en verre moulé de manière à correspondre auxdites première et seconde surfaces et à ladite surface latérale cylindrique.

**3.** Lentille de focalisation selon la revendication 2, comprenant, de plus, une forme telle que le rayon de courbure soit minimal à l'extérieur d'un diamètre effectif de ladite seconde surface.

**4.** Lentille de focalisation selon la revendication 1, comprenant, de plus, une surface conique de référence circulaire (25) centrant un axe optique qui ne bloque pas la transmission d'un flux lumineux réfracté à ladite première surface, dans une surface de séparation qui existerait en supposant que ladite partie de lentille virtuelle se chevauche avec ladite lentille de focalisation en verre moulé de manière à correspondre auxdites première et seconde surfaces et à ladite surface latérale cylindrique.

**5.** Dispositif de capteur optique **caractérisé en ce qu'**il comprend une lentille de focalisation en verre moulé comprenant : une première surface ayant une forme de surface convexe à symétrie centrale au moins dans la portée d'un faisceau optique traversant celle-ci ; une seconde surface ayant une forme de surface effective à symétrie centrale au moins dans la portée d'un faisceau optique traversant celle-ci sur le côté opposé à ladite première surface ; et une surface latérale cylindrique à symétrie centrale croisant ladite première surface, **caractérisé en ce qu'**un rayon de courbure central rA de ladite première surface satisfait à la formule suivante :

$$\sqrt[3]{\frac{3}{4\pi}V1} \leq rA < \sqrt[3]{\frac{3}{4\pi}V2}$$

dans laquelle V1 désigne le volume de ladite lentille de focalisation en verre moulé et V2 désigne le volume d'une partie de lentille virtuelle (160) entourée par une surface cylindrique comprenant lesdites première et seconde surfaces et ladite surface latérale cylindrique.

6. Appareil d'enregistrement/lecture optique **caractérisé en ce qu'**il comprend un dispositif de capteur optique comprenant une lentille de focalisation en verre moulé comprenant : une première surface ayant une forme de surface convexe à symétrie centrale au moins dans la portée d'un faisceau optique traversant celle-ci ; une seconde surface ayant une forme de surface effective à symétrie centrale au moins dans la portée d'un faisceau optique traversant celle-ci sur le côté opposé à ladite première surface ; et une surface latérale cylindrique à symétrie centrale croisant ladite première surface, **caractérisé en ce qu'**un rayon de courbure central rA de ladite première surface satisfait à la formule suivante :

$$\sqrt[3]{\frac{3}{4\pi}V1} \leq rA < \sqrt[3]{\frac{3}{4\pi}V2}$$

dans laquelle V1 désigne le volume de ladite lentille de focalisation en verre moulé et V2 désigne le volume d'une partie de lentille virtuelle (160) entourée par une surface cylindrique comprenant lesdites première et seconde surfaces et ladite surface latérale cylindrique.

EP 1 168 311 B1

# Fig. 1

# Fig. 2

# Fig. 3

# Fig. 4

# Fig. 5

# Fig. 6

# Fig. 7